**Europäisches Patentamt**

**European Patent Office**

**Office européen des brevets**

(19)

(11) Veröffentlichungsnummer: **0 136 669**

**A2**

(12)

# EUROPÄISCHE PATENTANMELDUNG

(21) Anmeldenummer: **84111618.9**

(22) Anmeldetag: **28.09.84**

(51) Int. Cl.⁴: **B 60 G 17/04**

(30) Priorität: **03.10.83 DE 3335874**

(43) Veröffentlichungstag der Anmeldung:
**10.04.85  Patentblatt 85/15**

(84) Benannte Vertragsstaaten:
**BE DE FR GB IT NL SE**

(71) Anmelder: **Knorr-Bremse GmbH**
**Moosacher Strasse 80**
**D-8000 München 40(DE)**

(72) Erfinder: *Riegel, Harald*
**Leopoldstrasse 206**
**D-8000 München 40(DE)**

(54) **Luftfedersystem für Nutzfahrzeuge.**

(57) Bei einem Luftfedersystem für Nutzfahrzeuge wird zur Anzeige des Abstandes zwischen dem Fahrzeugrahmen bzw. -aufbau und der Achse (3) des Fahrzeugs ein optisches System mit einem Niveaugeber (5) verwendet; der Niveaugeber ist mit einer in Abhängigkeit vom Abstand zwischen Rahmen (1) und Achse (3) verdrehbaren Codierscheibe (15) mit darauf befindlichen optischen Spuren versehen, die von einer Fühlereinrichtung (19) abtastbar sind. Für unterschiedliche Winkelpositionen der Codierscheibe, welche eine vorbestimmte, jeweilige Höhenlage wiedergeben, und für dazwischenbefindliche Winkelbereiche ist jeweils nur ein einzelner Code vorgesehen; demnach sind einigen Codes, welche vorher/bestimmte Winkelpositionen entsprechend der Höhenlage anzeigen, ein kleiner Winkel zugeordnet, während den darüber hinaus bestehenden Codes auf den Spuren die jeweils größeren Winkel zwischen den Winkelpositionen auf der Codierscheibe zugeordnet sind.

Fig. 2

Croydon Printing Company Ltd

Knorr-Bremse GmbH          München, 27.09.1983
Moosacher Straße 80        TP-hn-so
8000 München 40            – 1757 –

## Luftfedersystem für Nutzfahrzeuge

Die Erfindung betrifft ein Luftfedersystem nach dem Gattungsbegriff des Patentanspruches 1.

Luftfederungssysteme bekannter Art können verwendet werden, um durch Be- und Entlüftung von Luftfederbälgen den Höhenunterschied des Fahrzeugaufbaues zu regulieren. Diese Regulierung ist zum Beispiel bei wechselnder Belastung als auch zur Erhaltung des waagrechten Niveaus bei Kurvenfahrt erforderlich. Insbesondere kommt der Höhenregulierung mit Luftfederungsventilen Bedeutung im Containerbetrieb zu.

Die Aufgabe der vorliegenden Erfindung besteht darin, den Abstand zwischen Aufbau und Achse optisch bzw. akustisch erkennen zu lassen, derart, daß - je nach Anwendungsfall - ein gesteuertes Anheben oder Absenken des Fahrzeugrahmens ermöglicht ist. Insbesondere soll es ermöglicht sein, die jeweilige Höhen- bzw. Abstandsposition unverwechselbar aufzuzeigen.

Zur Lösung dieser Aufgabe dienen die Merkmale nach dem Kennzeichnungsteil des Patentanspruches 1.

Der optische Niveaugeber arbeitet "unverwechselbar", d.h., daß vorher-bestimmten, abstandsabhängigen Winkelpositionen der Codierscheibe jeweils nur ein Code zugeordnet ist, wobei die Codes durch auf der Codierscheibe angeordnete Spuren mit optisch unterschiedlichen Bereichen gebildet werden können./bei jeweils vorbestimmten Winkelpositionen der Codierscheibe und somit des mit der Codierscheibe verbundenen Hebels jeweils ein vorbestimmter Code vorgesehen ist, reicht es aus, den einen größeren Winkelbereich abdeckenden Abständen zwischen den Winkelpositionen gleichfalls nur einen vorbestimmten Code zuzuordnen. Auf diese Weise ist es mit einer äußerst geringen Anzahl von Spuren und zugeordneten optischen Sensoren möglich, eine Vielzahl von Winkelpositionen entsprechend dem Höhenabstand aufzuzeigen.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.

Figur 1          ist eine schematische Darstellung der
                 Position des Niveaugebers;

Figur 2          ist eine vergrößerte Einzelansicht der
                 in einem Gehäuse gelagerten Codierscheibe; und

Figur 3          ist eine vergrößerte Draufsicht auf
                 die Codierscheibe gemäß einer Ausführungsform der Erfindung.

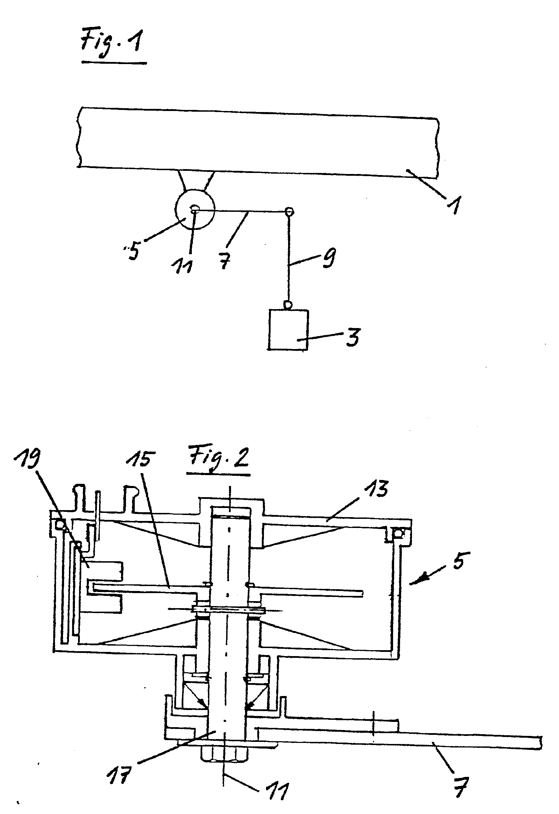

In Fig. 1 der Zeichnung ist in schematischer Weise der Rahmen 1 eines Fahrzeugs dargestellt; desgleichen ist die Achse 3 des Fahrzeugs, unter einem vorbestimmten Abstand zum Rahmen 1 befindlich, wiedergegeben. Am Rahmen 1 ist ein optischer Niveaugeber 5 befestigt. Der Niveaugeber von nachfolgend beschriebener Konstruktion ist mit Hilfe von Hebeln 7 und 9 mit der Achse 3 des Fahrzeugs verbunden. Bewegt sich der Rahmen 1 relativ zur Achse 3 nach unten gerichtet, bzw. bewegt sich die Achse 3 relativ zum Rahmen 1 nach oben gerichtet, dann wird der am Hebel 9 angelenkte Hebel 7 um die Achse 11 am optischen Niveaugeber 5 verschwenkt.

Der optische Niveaugeber 5 enthält ein am Rahmen 1 fixiertes Gehäuse 13 (Fig. 2), in welchem eine sog. Codierscheibe 15 drehbar gelagert ist. Die Codierscheibe 15 ist in der aus Fig. 2 ersichtlichen Weise mit einer Welle 17 verbunden, welche ihrerseits mit dem Hebel 7 in Verbindung steht. Winkelbewegungen des Hebels 7 lösen demnach Drehbewegungen der Welle 17 und somit der Codierscheibe 15 um die Achse 11 aus.

Im Inneren des Gehäuses 13 ist eine fotoelektrische Fühlereinrichtung 19 angebracht. Die Fühlereinrichtung 19 ist im dargestellten Ausführungsbeispiel nach Fig. 2 an der Innenseite des Gehäuses fixiert und umfaßt beide Seiten der Codierscheibe 15, welche sich relativ zur lagefixierten Fühlereinrichtung 19 zu drehen vermag. Die Fühlereinrichtung 19 enthält an sich bekannte Fühler≈ elemente in Form von opto-elektronischen Sendern und Empfängern, zwischen welchen sich die Codierscheibe dreht. Die Sender erzeugen parallele Lichtbündel, welche auf die Codierscheibe gerichtet sind und diese an vorbestimmten, durchsichtigen Positionen passieren können, derart, daß die Lichtbündel von dem an der anderen Seite befindlichen Empfänger empfangen werden. Durchsichtige Bereiche an der Codierscheibe liefern also bestimmte Signale; desgleichen werden andersgeartete Signale erzeugt, wenn die Lichtbündel auf undurchsichtige Positionen der Codierscheibe treffen, diese also nicht passieren können.

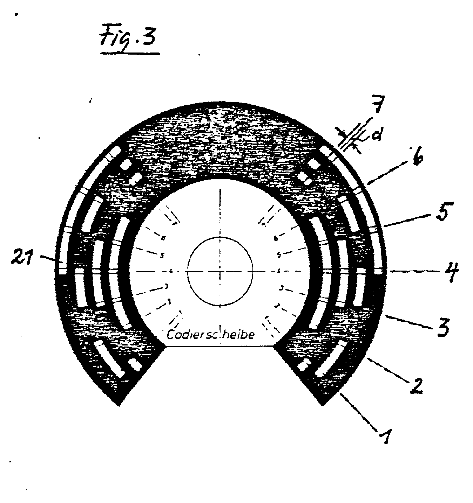

Die vorstehende, an sich bekannte Wirkungsweise der Fühlereinrichtung 19 mit ihren Sendern und Empfängern wird gemäß der Erfindung zur Anwendung gebracht, um den Abstand zwischen dem Aufbau, d.h. dem Rahmen 1 und der Achse 3 in Abhängigkeit von der Winkelposition des Hebels 7 festzustellen. Die in Fig. 3 der Zeichnung dargestellte Codierscheibe 15 trägt vier optische Spuren 21 mit verschiedenem optischen Zustand. Diese Spuren sind unter radialem Abstand zueinander auf der Codierscheibe 15 vorgesehen und beinhalten in unterschiedlichen Mustern angeordnete, durchsichtige und undurchsichtige Bereiche. Bei der Ausführungsform nach Fig. 3 ist für bestimmte Zwecke eine spiegelbildliche Anordnung der Spuren vorgesehen, obwohl natürlich eine einzelne derartige Spurengruppe ausreicht. Die in der Darstellung nach Fig. 3 radial äußerste Spur ist beispielsweise in den Winkelpositionen 4, 5, 6 und 7 durchsichtig, während sie in den Winkelpositionen 1, 2 und 3 undurchsichtig ist. Jeder der Spuren mit unterschiedlichem optischen Zustand ist ein Paar von Sendern und Empfängern zugeordnet, d.h., daß in der Anordnung nach Fig. 3 in radialer Ausrichtung vier zum Beispiel opto-elektronische Sender und vier zugeordnete Empfänger vorgesehen sind. Wie vorstehend erläutert ist, wird die Codierscheibe 15 entsprechend der Winkelbewegungen des Hebels 7 gedreht, derart, daß die unterschiedlichen Positionen auf der Codierscheibe in Deckung mit den vier Paaren von Empfängern und Sendern gelangen. Wird beispielsweise die Codierscheibe 15 durch entsprechende Winkelverdrehung des Hebels 7 so gedreht, daß die Winkelposition 4 gemäß Fig. 3 auf die Sender und Empfänger ausgerichtet ist, dann werden mit Hilfe der an sich bekannten Fühlereinrichtung von beispielsweise opto-elektronischer Wirkungsweise vier gleiche Signale erzeugt, da ja in der Winkelposition 4 alle entsprechenden Spurenbereiche der vier optischen Spuren durchsichtig sind. Die vier gleichen Signale stehen nach entsprechender Verstärkung und Impulsformung als Information für die Winkelposition 4 zur Verfügung. Bei der Winkelposition 6 sind die beiden radialäußeren Code-Spuren an der entsprechenden Stelle durchsichtig, während die beiden radialinneren Spuren undurchsichtig sind. Die entsprechende Information hierfür unterscheidet sich demnach von der nach der Winkelposition 4.

Aus Fig. 3 ist ersichtlich, daß die aus Sender und Empfänger bestehenden optischen Lichtschranken einen bestimmten Winkelbereich abdecken, innerhalb welchem sie einen vorbestimmten optischen Code erzeugen; dieser Winkelbereich ist unter Bezugnahme auf die Winkelposition 7 mit d aufgezeigt. Außerhalb dieses Winkelbereiches bestehen zu beiden Seiten der Winkelposition 7 unterschiedliche Codierungen, d.h., daß die Zwischenbereiche zwischen den Winkelpositionen 1 und 2, 2 und 3 etc., einen gesonderten optischen Code aufweisen. Außer den sieben optischen Codierungen für die sieben Winkelpositionen 1 - 7 sind weitere sechs optische Codierungen für die Winkelzwischenbereiche zwischen den Winkelpositionen vorgesehen, d.h. insgesamt 13 optische Codierungen. Zusätzlich sind außerhalb des Meßbereichs der Winkelpositionen 1 und 7 gesonderte optische Codierungen vorgesehen, welche auch zeigen, ob sich die Codierscheibe 15 über die Winkelposition 1 bzw. 7 hinausbewegt hat. Somit sind insgesamt 7 plus 6 plus 2 = 15 optische Codierungen für die Positionen der Codierscheibe vorgegeben sind. Es ist von besonderem Vorteil, daß die Zwischenbereiche zwischen den Winkelpositionen 1 und 2, 2 und 3 etc., jeweils nur eine einzelne optische Codierung besitzen, da es für den Anwendungsfall vollständig ausreicht, sich darüber zu vergewissern, in welchem Höhen-Zwischenbereich der Luftfederung gefahren bzw. gearbeitet wird. Es ist demnach nicht nötig, mit

6 0136669

einer großen Anzahl von Spuren zu arbeiten, wie dies bei einem Winkelcodierer der Fall ist, der über den gesamten Bereich gleichmäßig aufgeteilt ist.

Kurzfassung
Bei einem Luftfedersystem für Nutzfahrzeuge wird zur Anzeige des Abstandes zwischen dem Fahrzeugrahmen bzw. -aufbau und der Achse des Fahrzeugs ein optisches System mit einem Niveaugeber verwendet; der Niveaugeber ist mit einer in Abhängigkeit vom Abstand zwischen Rahmen und Achse verdrehbaren Codierscheibe mit darauf befindlichen optischen Spuren versehen, die von einer Fühlereinrichtung abtastbar sind. Für unterschiedliche Winkelpositionen der Codierscheibe, welche eine vorbestimmte, jeweilige Höhenlage widergeben, und für dazwischenbefindliche Winkelbereiche ist jeweils nur ein einzelner Code vorgesehen; demnach sind einigen Codes, welche vorher bestimmte Winkelpositionen entsprechend der Höhenlage anzeigen, ein kleiner Winkel zugeordnet, während den darüber hinaus bestehenden Codes auf den Spuren die jeweils größeren Winkel zwischen den Winkelpositionen auf der Codierscheibe zugeordnet sind.

Knorr-Bremse GmbH
Moosacher Straße 80
8000 München 40

München, 27.09.1983
TP1-hn-so
- 1757 -

0136669

Bezugszeichenliste

————————————

1    Rahmen
3    Achse
5    Niveaugeber
7    Hebel
9    Hebel
11   Achse
13   Gehäuse
15   Codierscheibe
17   Welle
19   Fühlereinrichtung
21   optische Spuren
d    Winkelbereich

Knorr-Bremse GmbH
Moosacher Straße 80
8000 München 40

München, 27.09.1983
TP1-hn-so
- 1757 -

Patentansprüche

1. Luftfedersystem für Nutzfahrzeuge, mit einer Einrichtung zur Anzeige der Luftfederhöhe in Abhängigkeit
des Abstandes zwischen Fahrzeugrahmen und Achse, gekennzeichnet durch einen optischen Niveaugeber (5),
welcher durch die höhenabhängige Winkelposition eines
am Fahrzeugrahmen und an der Achse angelenkten Hebelsystems
aktivierbar ist.

2. Luftfedersystem nach Anspruch 1, dadurch gekennzeichnet, daß der Niveaugeber (5) aus einem Winkelschrittgeber mit einer mit einem Hebel (7) verbundenen
Codierscheibe (15) besteht, die eine bestimmte Anzahl
von Spuren mit optisch verschiedenen, berührungslos
abtastbaren Bereichen trägt.

3. Luftfedersystem nach Anspruch 2, dadurch gekennzeichnet, daß die Codierscheibe (15) in einem mit dem Rahmen
(1) des Fahrzeugs verbundenen Gehäuse (13) drehbar gelagert und mittels der sie tragenden Welle (17) mit
dem Hebel (7) außerhalb des Gehäuses verbunden ist,
und daß innerhalb des Gehäuses (13) eine Fühlereinrichtung (19),vorzugsweise aus optischen Sendern und
Empfängern bestehend, an beiden Seiten der Codierscheibe angeordnet ist.

4. Luftfedersystem nach einem der vorangegehenden Ansprüche, dadurch gekennzeichnet, daß die Fühlereinrichtung (19) optische Sensoren zum Abtasten der unterschiedlichen Spuren auf der Codierscheibe enthält.

5. Luftfedersystem nach einem der vorangehenden Ansprüche, dadurch gekennzeichnet, daß für jede Winkelposition der Codierscheibe jeweils nur eine einzelne, optische Codierung besteht, derart, daß dem durch die Sensoren abfühlbaren Code eine bestimmte Winkellage der Codierscheibe zugeordnet werden kann.

6. Luftfedersystem nach einem der vorangehenden Ansprüche, dadurch gekennzeichnet, daß die Winkelzwischenbereiche zwischen den vorbestimmte Winkelpositionen angebenden Codierungen der Codierscheibe gleichfalls einen vorbestimmten Code tragen.

Fig. 1

Fig. 2

Fig.3

Codierscheibe